# EUROPÄISCHE PATENTSCHRIFT

(11) **EP 3 013 135 B1**
(45) Veröffentlichungstag und Bekanntmachung des Hinweises auf die Patenterteilung: **11.10.2017**
(21) Anmeldenummer: 14741907.1
(22) Anmeldetag: 23.07.2014
(51) Int. Cl.: A01D 41/14

(54) **SCHNEIDWERK**
CUTTING UNIT
DISPOSITIF DE COUPE

(30) Priorität: 25.07.2013 DE 102013214596
(43) Veröffentlichungstag der Anmeldung: 04.05.2016
(73) Patentinhaber: Zürn Harvesting GmbH & Co. KG, 74214 Schöntal-Westernhausen (DE)
(72) Erfinder: SCHLOTZ, Roland, 97959 Assamstadt (DE); MUGRAUER, Armin, 74632 Neuenstein-Eschelbach (DE)
(74) Vertreter: Manitz Finsterwald Patentanwälte PartmbB
(86) Internationale Anmeldenummer: PCT/EP2014/065789
(87) Internationale Veröffentlichungsnummer: WO 2015/011176

(56) Entgegenhaltungen:
- US-A1- 2010 083 629

## Beschreibung

Die vorliegende Erfindung betrifft ein Schneidwerk für eine Erntemaschine, insbesondere für einen Mähdrescher, mit einem Schneidwerksrahmen und einem an dem Schneidwerksrahmen gehaltenen Mähbalken zum Mähen eines Ernteguts.

Schneidwerke dieser Art werden bei der maschinellen Ernte von landwirtschaftlichen Nutzpflanzen, wie zum Beispiel Getreide, Raps, Soja oder Sonnenblumen, eingesetzt. Beim Einsatz solcher Schneidwerke kann es vorkommen, dass Steine, Bodenwellen oder dergleichen punktuelle Belastungen auf den Mähbalken ausüben. Solche Belastungen können schlimmstenfalls zu dauerhaften Verformungen am Mähbalken führen, welche wiederum Probleme beim nachfolgenden Ernten nach sich ziehen. Prinzipiell könnte dieses Problem durch eine entsprechende Verstärkung des Schneidwerksrahmens und/oder des Mähbalkens gelöst werden. Da moderne Schneidwerke für Erntemaschinen jedoch vergleichsweise hohe Gewichte von bis zu mehreren tausend Kilogramm aufweisen, ist eine weitere Verstärkung eines Schneidwerks im Allgemeinen unerwünscht. Ein Schneidwerk gemäß dem Oberbegriff des Anspruchs 1 ist aus der Druckschrift US-A1-2010/0083629 bekannt. Es ist eine Aufgabe der Erfindung, ein Schneidwerk für eine Erntemaschine anzugeben, bei welchem unter Einsatz einfacher Mittel das Risiko für eine Beschädigung des Mähbalkens verringert ist.

Die Lösung der Aufgabe erfolgt durch ein Schneidwerk mit den Merkmalen des Anspruchs 1.

Erfindungsgemäß ist der Mähbalken für eine Überlastsicherung über wenigstens eine Puffereinrichtung mit dem Schneidwerksrahmen gekoppelt, welche bei einer einen Schwellenwert übersteigenden Krafteinwirkung auf den Mähbalken in einer Ausweichrichtung eine wenigstens abschnittsweise Ausweichbewegung des Mähbalkens ermöglicht.

Durch eine solche Überlastsicherung können auf den Mähbalken einwirkende Belastungen aufgefangen werden, ohne dass hierfür eine strukturelle Verstärkung des Schneidwerksrahmens oder des Mähbalkens erforderlich wäre.

Vorzugsweise weist die Ausweichrichtung bei bestimmungsgemäß angeordnetem Schneidwerk nach oben und/oder nach unten. Somit sind Belastungen, die beispielsweise durch Bodenwellen oder größere Steine hervorgerufen werden, durch die Ausweichbewegung des Mähbalkens kompensierbar. Eine spezielle Ausgestaltung sieht vor, dass die Puffereinrichtung je nach Belastung sowohl eine Ausweichbewegung des Mähbalkens nach oben als auch eine Ausweichbewegung des Mähbalkens nach unten ermöglicht.

Die Puffereinrichtung ist dazu ausgebildet, den Mähbalken lagestabil am Schneidwerksrahmen zu halten, wenn die Krafteinwirkung auf den Mähbalken in der Ausweichrichtung den Schwellenwert nicht übersteigt. Der Mähbalken ist also gemäß dieser Ausgestaltung nicht etwa schwimmend am Schneidwerksrahmen gelagert, sondern bildet mit dem Schneidwerksrahmen während des üblichen Erntebetriebs eine feste und unbewegliche Einheit. Lediglich in einer Überlastsituation, das heißt bei Überschreiten des Schwellenwerts, spricht die Sicherung an und ermöglicht eine vergleichsweise geringfügige Ausweichbewegung des Mähbalkens. Es muss also keine stark beanspruchbare und somit wartungsintensive Lagerung des Mähbalkens am Schneidwerksrahmen vorgesehen sein, da eine Überlastsituation während des üblichen Erntebetriebs nur vergleichsweise selten vorkommt. Während der überwiegenden Zeit des Erntebetriebs ist der Mähbalken wie bei einer so genannten "rigid platform" fest und unbeweglich am Schneidwerksrahmen gehalten.

Gemäß der Erfindung ist vorgesehen, dass der Schwellenwert wenigstens 5 kN, bevorzugt wenigsten 10 kN und besonders bevorzugt etwa 15 kN beträgt. Die Überlastsicherung löst also lediglich bei relativ großen Belastungen aus, bei welchen auch wirklich eine Gefahr der Schneidwerksbeschädigung besteht.

Vorzugsweise ist die Ausweichbewegung des Mähbalkens auf eine vorgegebene Maximalauslenkung begrenzt, insbesondere durch einen mechanischen Anschlag. Dadurch wird verhindert, dass eine übermäßig große Ausweichbewegung des Mähbalkens die Funktion anderer Bauteile des Schneidwerks, beispielsweise einer Fördereinrichtung zum Wegfördern des gemähten Ernteguts vom Mähbalken, beeinträchtigt.

Die Maximalauslenkung beträgt gemäß einer Ausgestaltung der Erfindung bezogen auf die Ausweichrichtung höchstens 200 mm, bevorzugt höchstens 150 mm und besonders bevorzugt etwa 100 mm. Eine solche Begrenzung der Maximalauslenkung hat sich in der Praxis als besonders günstig erwiesen.

Eine spezielle Ausgestaltung der Erfindung sieht vor, dass die Puffereinrichtung wenigstens einen Verformungskörper aus einem elastischen Material, insbesondere aus Hartgummi, umfasst. Eine solche Puffereinrichtung ist leicht und kostengünstig herstellbar. Ein elastischer Verformungskörper kann sowohl stoßaufnehmend als auch schwingungsdämpfend wirken.

Weiterhin kann vorgesehen sein, dass der Mähbalken durch eine Tragstruktur an dem Schneidwerksrahmen gehalten ist, wobei die Puffereinrichtung zwischen mindestens einem schneidwerksrahmenseitigen Bauteil der Tragstruktur und mindestens einem davon getrennten mähbalkenseitigen Bauteil der Tragstruktur wirksam ist. Mit anderen Worten kann die Tragstruktur geteilt ausgeführt sein, so dass ein funktionelles Zwischenschalten der Puffereinrichtung zwischen die Teile möglich ist.

Gemäß einer speziellen Ausgestaltung der Erfindung ist das mähbalkenseitige Bauteil der Tragstruktur für eine Ausweichbewegung des Mähbalkens relativ zu dem schneidwerksrahmenseitigen Bauteil der Tragstruktur verschwenkbar, wobei die Puffereinrichtung bezüglich der Schwenkbewegung bevorzugt einen Torsionspuffer bildet. Durch Schwenken des mähbalkenseitigen Bauteils nach oben kann der Mähbalken in einer Überlastsituation einer Bodenwelle oder einem Stein ausweichen.

Es kann weiterhin vorgesehen sein, dass die Tragstruktur eine Anordnung aus mehreren, insbesondere parallel verlaufenden, Tragarmen umfasst, welche jeweils einen mähbalkenseitigen Vorderabschnitt, einen schwenkbar daran angelenkten schneidwerksrahmenseitigen Hinterabschnitt und eine zwischen dem Vorderabschnitt und dem Hinterabschnitt wirksame Puffereinrichtung umfassen. Die mehreren Tragarme können insbesondere gleichmäßig über die Breite des Schneidwerks verteilt angeordnet sein. Aufgrund der mehreren Tragarme kann der Mähbalken lokal ausweichen, indem beispielsweise die Überlastsicherungen lediglich eines Teils der mehreren Tragarme anspricht.

Vorzugsweise ist für jeden der Tragarme eine separate Puffereinrichtung vorgesehen, um das vorstehend genannte lokale Ausweichen zu unterstützen.

Der Mähbalken ist vorzugsweise entlang seiner Längsachse ungeteilt ausgeführt. Dies ermöglicht im Vergleich zu einem Mähbalken in Segmentbauweise eine einfachere und robustere Konstruktion. Sollte es die Anwendung erfordern, so kann der Mähbalken jedoch auch in mehrere relativ zueinander bewegliche Segmente unterteilt sein.

Die Erfindung betrifft auch eine Erntemaschine, insbesondere einen Mähdrescher, welcher ein Schneidwerk wie vorstehend beschrieben aufweist.

Die Erfindung wird nachfolgend beispielhaft unter Bezugnahme auf die Zeichnung beschrieben.
- Fig. 1: zeigt eine vereinfachte, teilweise aufgeschnittene Seitenansicht eines erfindungsgemäßen Schneidwerks.
- Fig. 2: ist eine perspektivische Teildarstellung des in Fig. 1 dargestellten Schneidwerks schräg von hinten.
- Fig. 3: ist eine vergrößert Teildarstellung der in Fig. 2 gezeigten Anordnung, welche die Lagerung eines Mähbalkens des Schneidwerks an einem Schneidwerksrahmen des Schneidwerks verdeutlicht.
- Fig. 4: zeigt ein Gummipufferelement, über welches der in Fig. 3 gezeigte Mähbalken mit dem Schneidwerksrahmen gekoppelt ist.

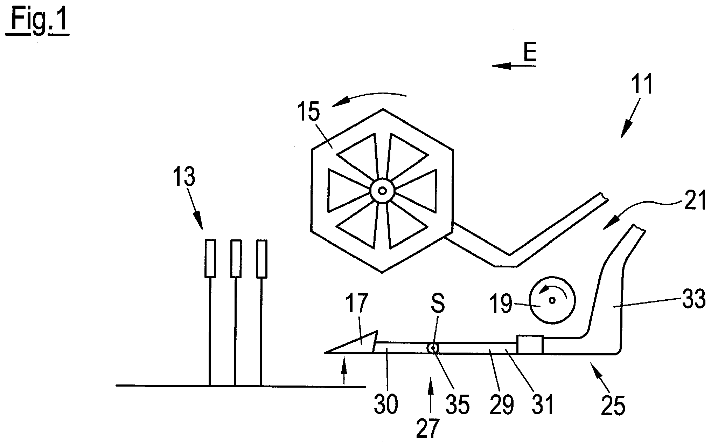

In Fig. 1 ist in vereinfachter Form ein Schneidwerk 11 für einen nicht dargestellten Mähdrehscher gezeigt, welcher dazu ausgebildet ist, Nutzpflanzen 13, wie zum Beispiel Roggen, Weizen, Gerste, Soja oder Raps, entlang einer Ernterichtung E zu mähen und nachfolgend einem Dreschvorgang zu unterziehen. Das Schneidwerk 11 umfasst in an sich bekannter Weise eine drehbar angetriebene Haspel 15 sowie einen unterhalb der Haspel 15 angeordneten, sich quer zu der Ernterichtung E erstreckenden Messerbalken oder Mähbalken 17. Hinter dem Mähbalken 17 ist eine Einzugsschnecke 19 angeordnet, welche dazu dient, die abgemähten Nutzpflanzen 13 in einen Einzugsschacht 21 zu fördern. Alternativ oder zusätzlich zu der Einzugsschnecke 19 kann auch eine Bandförderer-Anordnung zum Transportieren der abgemähten Nutzpflanzen 13 vorgesehen sein, welche in Fig. 1 jedoch nicht dargestellt ist.

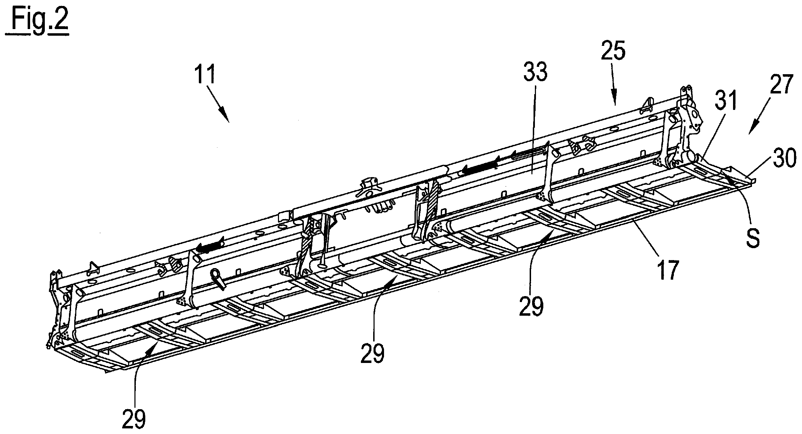

Wie aus der Darstellung gemäß Fig. 2 hervorgeht, umfasst das Schneidwerk 11 einen Schneidwerksrahmen 25, an welchem der Mähbalken 17 mittels einer Tragstruktur 27 in Form von mehreren parallel verlaufenden Tragarmen 29 gehalten ist. Jeder der Tragarme 29 ist geteilt ausgeführt und umfasst einen mähbalkenseitigen Vorderabschnitt 30 sowie einen schneidwerksrahmenseitigen Hinterabschnitt 31. Während die Vorderabschnitte 30 aller Tragarme 29 gemeinsam den Mähbalken 17 tragen, sind die Hinterabschnitte 31 der Tragarme 29 an einer zu dem Schneidwerksrahmen 25 gehörenden Schneidwerksrückwand 33 angebracht. Der Vorderabschnitt 30 jedes Tragarms 29 ist gegenüber dem entsprechenden Hinterabschnitt 31 um eine Schwenkachse S nach oben verschwenkbar, etwa wenn aufgrund eines nicht dargestellten Steins eine entsprechende lokale Kraft auf den Mähbalken 17 ausgeübt wird, wie in Fig. 1 durch einen Pfeil dargestellt ist.

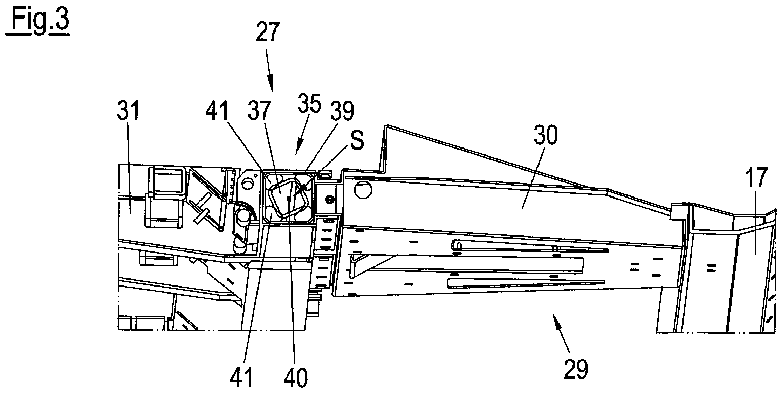

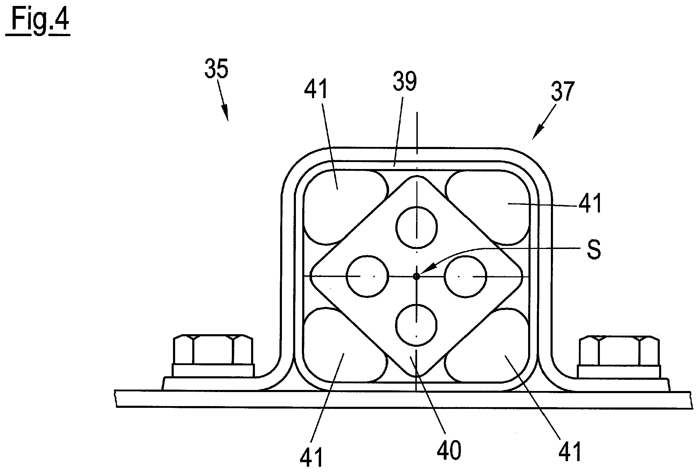

Zur Kontrolle der Schwenkbewegung ist jeder der Tragarme 29 mit einer in Fig. 3 gezeigten Puffereinrichtung 35 versehen, welche zwischen dem Vorderabschnitt 30 und dem Hinterabschnitt 31 wirksam ist und der aufwärts gerichteten Schwenkbewegung des Vorderabschnitts 30 einen definierten Widerstand entgegensetzt. Im Einzelnen ist jede Puffereinrichtung 35 dadurch gebildet, dass der Vorderabschnitt 30 des zugehörigen Tragarms 29 über ein Gummifederelement 37 am entsprechenden Hinterabschnitt 31 gelagert ist. Ein solches, an sich bekanntes Gummifederelement 37 ist in Fig. 4 vergrößert dargestellt. Es umfasst ein rechteckförmiges Hohlprofil 39 und einen in dem Hohlprofil 39 angeordneten Vierkantstab 40. Das Hohlprofil 39 ist am Vorderabschnitt 30 eines Tragarms 29 befestigt, an dessen Hinterabschnitt 31 der Vierkantstab 40 befestigt ist oder umgekehrt. Vier Hartgummikörper 41 sind in den Ecken des rechteckförmigen Hohlprofils 39 angeordnet und verklemmen den Vierkantstab 40 zentrierend in dem Hohlprofil 39. Die Hartgummikörper 41 sind gegen einen definierten, vergleichsweise hohen Widerstand verformbar. Wenn dieser Widerstand nicht überwunden wird, ist der Vorderabschnitt 30 des entsprechenden Tragarms 29 fest und unbeweglich am Hinterabschnitt 31 gelagert. Bei entsprechend großer Kraftausübung kann jedoch der Vorderabschnitt 30 unter Verformung der Hartgummikörper 41 geringfügig gegenüber dem Hinterabschnitt 31 verschwenkt werden. Die Gummifederelemente 37 bilden daher eine Überlastsicherung, welche bei einer von unten erfolgenden übermäßigen Kraftausübung auf den Mähbalken 17 eine Ausweichbewegung des Mähbalkens 17 nach oben ermöglicht und das Schneidwerk 11 somit vor einer unerwünschten dauerhaften Verformung schützt.

Die Puffereinrichtungen 35 können speziell dazu ausgelegt sein, lediglich dann ein Verschwenken des Vorderabschnitts 30 nach oben zu ermöglichen, wenn die auf den Mähbalken 17 von unten ausgeübte Kraft etwa 15 kN beträgt. Die Schwenkbewegung ist vorzugsweise auf eine Maximalauslenkung von etwa 100 mm, bezogen auf die Spitze des Mähbalkens 17, begrenzt. Weiterhin ist das System vorzugsweise derart ausgelegt, dass die Maximalauslenkung bei einer Kraft von etwa 25 kN erreicht wird.

Aufgrund der durch die Puffereinrichtungen 35 ermöglichten Ausweichbewegung der Tragarme 29 können von unten auf das Schneidwerk 11 einwirkende Überbeanspruchungen aufgefangen werden, ohne dass dauerhafte Verformungen des Mähbalkens 17 oder anderer Bauteile des Schneidwerks 11 drohen.

### Bezugszeichenliste

- 11: Schneidwerk
- 13: Nutzpflanze
- 15: Haspel
- 17: Mähbalken
- 19: Einzugsschnecke
- 21: Einzugsschacht
- 25: Schneidwerksrahmen
- 27: Tragstruktur
- 29: Tragarm
- 30: Vorderabschnitt
- 31: Hinterabschnitt
- 33: Schneidswerksrückwand
- 35: Puffereinrichtung
- 37: Gummifederelement
- 39: Hohlprofil
- 40: Vierkantstab
- 41: Hartgummikörper

- S: Schwenkachse

## Patentansprüche

1. Schneidwerk (11) für eine Erntemaschine, insbesondere für einen Mähdrescher, mit
einem Schneidwerksrahmen (25) und
einem an dem Schneidwerksrahmen (25) gehaltenen Mähbalken (17) zum Mähen eines Ernteguts, wobei
der Mähbalken (17) für eine Überlastsicherung über wenigstens eine Puffereinrichtung (35) mit dem Schneidwerksrahmen (25) gekoppelt ist, welche bei einer einen Schwellenwert übersteigenden Krafteinwirkung auf den Mähbalken (17) in einer Ausweichrichtung eine wenigstens abschnittsweise Ausweichbewegung des Mähbalkens (17) ermöglicht
**dadurch gekennzeichnet, dass**
die Puffereinrichtung (35) dazu ausgebildet ist, den Mähbalken (17) lagestabil am Schneidwerksrahmen (25) zu halten, wenn die Krafteinwirkung auf den Mähbalken (17) in der Ausweichrichtung den Schwellenwert nicht übersteigt, wobei der Schwellenwert wenigstens 5 kN beträgt.

2. Schneidwerk nach Anspruch 1,
**dadurch gekennzeichnet, dass**
die Ausweichrichtung bei bestimmungsmäßig angeordnetem Schneidwerk (11) nach oben und/oder nach unten weist.

3. Schneidwerk nach Anspruch 1 oder 2,
**dadurch gekennzeichnet, dass**
der Schwellenwert wenigstens 10 kN beträgt.

4. Schneidwerk nach einem der vorstehenden Ansprüche,
**dadurch gekennzeichnet, dass**
der Schwellenwert etwa 15 kN beträgt.

5. Schneidwerk nach einem der vorstehenden Ansprüche,
**dadurch gekennzeichnet, dass**
die Ausweichbewegung des Mähbalkens (17) auf eine vorgegebene Maximalauslenkung begrenzt ist, insbesondere durch einen mechanischen Anschlag.

6. Schneidwerk nach Anspruch 5,
**dadurch gekennzeichnet, dass**
die Maximalauslenkung bezogen auf die Ausweichrichtung höchstens 200mm, bevorzugt höchstens 150mm und besonders bevorzugt etwa 100mm beträgt.

7. Schneidwerk nach einem der vorstehenden Ansprüche,
**dadurch gekennzeichnet, dass**
die Puffereinrichtung (35) wenigstens einen Verformungskörper aus einem elastischen Material, insbesondere aus Hartgummi, umfasst.

8. Schneidwerk nach einem der vorstehenden Ansprüche,
**dadurch gekennzeichnet, dass**
der Mähbalken (17) durch eine Tragstruktur (27) an dem Schneidwerksrahmen (25) gehalten ist, wobei die Puffereinrichtung (35) zwischen mindestens einem schneidwerksrahmeneitigen Bauteil (31) der Tragstruktur (27) und mindestens einem davon getrennten mähbalkenseitigen Bauteil (30) der Tragstruktur (27) wirksam ist.

9. Schneidwerk nach Anspruch 8,
**dadurch gekennzeichnet, dass**
das mähbalkenseitige Bauteil (30) der Tragstruktur (27) für eine Ausweichbewegung des Mähbalkens (17) relativ zu dem schneidwerksrahmenseitigen Bauteil (31) der Tragstruktur (27) verschwenkbar ist, wobei die Puffereinrichtung (35) bezüglich der Schwenkbewegung bevorzugt einen Torsionspuffer bildet.

10. Schneidwerk nach Anspruch 8 oder 9,
**dadurch gekennzeichnet, dass**
die Tragstruktur (27) eine Anordnung aus mehreren, insbesondere parallel verlaufenden, Tragarmen (29) umfasst, welche jeweils einen mähbalkenseitigen Vorderabschnitt (30), einen schwenkbar daran angelenkten schneidwerksrahmeneitigen Hinterabschnitt (31) und eine zwischen dem Vorderabschnitt (30) und dem Hinterabschnitt (31) wirksame Puffereinrichtung (35) umfassen.

11. Schneidwerk nach Anspruch 10,
**dadurch gekennzeichnet, dass**
für jeden der Tragarme (29) eine separate Puffereinrichtung (35) vorgesehen ist.

12. Schneidwerk nach einem der vorstehenden Ansprüche,
**dadurch gekennzeichnet, dass**
der Mähbalken (17) entlang seiner Längsachse ungeteilt ausgeführt ist.

13. Erntemaschine, insbesondere Mähdrescher,
welche ein Schneidwerk (11) gemäß einem der vorstehenden Ansprüche aufweist.

## Claims

1. A cutting unit (11) for a harvester, in particular for a combine harvester, comprising
a cutting unit frame (25); and
a cutter bar (17) held at the cutting unit frame (25) for reaping a crop, wherein,
for a security against overload, the cutter bar (17) is coupled to the cutting unit frame (25) via at least one buffer device (35) which allows an at least section-wise escape movement of the cutter bar (17) in an escape direction on an exertion of force on the cutter bar (17) exceeding a threshold value,
**characterized in that**
the buffer device (35) is configured to hold the cutter bar (17) at the cutting unit frame (25) in a stable position if the exertion of force on the cutter bar (17) does not exceed the threshold value in the escape direction, with the threshold value amounting to at least 5 kN.

2. A cutting unit in accordance with claim 1,
**characterized in that**
the escape direction faces upwardly and/or downwardly when the cutting unit (11) is arranged in accordance with its intended purpose.

3. A cutting unit in accordance with claim 1 or claim 2,
**characterized in that**
the threshold value amounts to at least 10 kN.

4. A cutting unit in accordance with any one of the preceding claims,
**characterized in that**
the threshold value amounts to approximately 15 kN.

5. A cutting unit in accordance with any one of the preceding claims,
**characterized in that**
the escape movement of the cutter bar (17) is restricted to a predefined maximum excursion, in particular by a mechanical abutment.

6. A cutting unit in accordance with claim 5,
**characterized in that**
the maximum excursion with respect to the escape direction amounts to at most 200 mm, preferably to at most 150 mm, and particularly preferably to approximately 100 mm.

7. A cutting unit in accordance with any one of the preceding claims,
**characterized in that**
the buffer device (35) comprises at least one deformation body composed of an elastic material, in particular of hard rubber.

8. A cutting unit in accordance with any one of the preceding claims,
**characterized in that**
the cutter bar (17) is held at the cutting unit frame (25) by a support structure (27), with the buffer device (35) being active between at least one component (31) of the support structure (27) at the cutting unit frame side and, separate therefrom, at least one component (30) of the support structure (27) at the cutter bar side.

9. A cutting unit in accordance with claim 8,
**characterized in that**
the component (30) of the support structure (27) at the cutter bar side is pivotable relative to the component (31) of the support structure (27) at the cutting unit frame side for an escape movement of the cutter bar (17), with the buffer device (35) preferably forming a torsion buffer with respect to the pivot movement.

10. A cutting unit in accordance with claim 8 or claim 9,
**characterized in that**
the support structure (27) comprises an arrangement of a plurality of support arms (29) which in particular extend in parallel and which each comprise a front section (30) at the cutter bar side; a rear section (31) at the cutting unit frame side pivotably connected to said front section in an articulated manner; and a buffer device (35) active between the front section (30) and the rear section (31).

11. A cutting unit in accordance with claim 10,
**characterized in that**
a separate buffer device (35) is provided for each of the support arms (29).

12. A cutting unit in accordance with any one of the preceding claims,
**characterized in that**
the cutter bar (17) is designed as undivided along its longitudinal axis.

13. A harvester, in particular a combine harvester,
which has a cutting unit (11) in accordance with any one of the preceding claims.

## Revendications

1. Dispositif de coupe (11) pour une machine de récolte, en particulier pour une moissonneuse-batteuse, comportant
un cadre (25), et
une barre de fauchage (17) retenue sur le cadre (25) du dispositif de coupe et destinée à faucher un produit de récolte,
dans lequel
en vue d'une protection anti-surcharge, la barre de fauchage (17) est couplée au cadre (25) du dispositif de coupe par au moins un moyen formant tampon (35) qui, lors d'un effort exercé sur la barre de fauchage (17) et dépassant une valeur seuil, permet un mouvement de contournement au moins partiel de la barre de fauchage (17) dans une direction de contournement,
**caractérisé en ce que**
le moyen tampon (35) est conçu pour maintenir la barre de fauchage (17) en position stable sur le cadre (25) du dispositif de coupe lorsque l'effort exercé sur la barre de fauchage (17) dans la direction de contournement ne dépasse pas la valeur seuil, la valeur seuil étant au moins de 5 kN.

2. Dispositif de coupe selon la revendication 1,
**caractérisé en ce que**
la direction de contournement est dirigée vers le haut et/ou vers le bas, le dispositif de coupe (11) étant agencé de façon adéquate.

3. Dispositif de coupe selon la revendication 1 ou 2,
**caractérisé en ce que**
la valeur seuil est d'au moins 10 kN.

4. Dispositif de coupe selon la revendication 1,
**caractérisé en ce que**
la valeur seuil est d'environ 15 kN.

5. Dispositif de coupe selon l'une des revendications précédentes,
**caractérisé en ce que**
le mouvement de contournement de la barre de fauchage (17) est limité à une déviation maximale prédéterminée, en particulier par une butée mécanique.

6. Dispositif de coupe selon la revendication 5,
**caractérisé en ce que**
la déviation maximale par rapport à la direction de contournement s'élève au maximum à 200 mm, de préférence au maximum à 150 mm et de préférence particulière à environ 100 mm.

7. Dispositif de coupe selon l'une des revendications précédentes,
**caractérisé en ce que**
le moyen tampon (35) comprend au moins un corps de déformation en un matériau élastique, en particulier en caoutchouc dur.

8. Dispositif de coupe selon l'une des revendications précédentes,
**caractérisé en ce que**
la barre de fauchage (17) est retenue sur le cadre (25) du dispositif de coupe par une structure de support (27), le moyen tampon (35) agissant entre au moins un composant (31) de la structure de support (27) disposé du côté cadre et au moins un composant (30) de la structure de support (27) séparé de celui-ci et disposé du côté barre de fauchage.

9. Dispositif de coupe selon la revendication 8,
**caractérisé en ce que**
en vue d'un mouvement de contournement de la barre de fauchage (17), le composant (30) de la structure de support (27) disposé du côté barre de fauchage est mobile en pivotement par rapport au composant (31) de la structure de support (27) disposé du côté cadre, le moyen tampon (35) formant de préférence un tampon de torsion par rapport au mouvement de pivotement.

10. Dispositif de coupe selon la revendication 8 ou 9,
**caractérisé en ce que**
la structure de support (27) comprend un agencement de plusieurs bras de support (29) qui s'étendent en particulier parallèlement et qui comprennent chacun une portion avant (30) côté barre de fauchage, une portion arrière (31) côté cadre articulée en pivotement sur celle-ci, et un moyen tampon (35) agissant entre la portion avant (30) et la portion arrière (31).

11. Dispositif de coupe selon la revendication 10,
**caractérisé en ce que**
pour chacun des bras de support (29), il est prévu un moyen tampon séparé (35).

12. Dispositif de coupe selon l'une des revendications précédentes,
**caractérisé en ce que**
la barre de fauchage (17) est non divisée le long de son axe longitudinal.

13. Machine de récolte, en particulier moissonneuse-batteuse,
qui comprend un dispositif de coupe (11) selon l'une des revendications précédentes.
